Europäisches Patentamt

European Patent Office

Office européen des brevets

(19)

(11) Publication number: **0 282 240**

**A1**

(12) # EUROPEAN PATENT APPLICATION

(21) Application number: **88301907.7**

(22) Date of filing: **04.03.88**

(51) Int. Cl.4: **C04B 28/34** , C04B 20/10 , C04B 38/10 , //(C04B28/34, 14:04,14:18,20:10,22:08,22:10)

(30) Priority: **09.03.87 GB 8705444**

(43) Date of publication of application: **14.09.88 Bulletin 88/37**

(84) Designated Contracting States: **AT BE CH DE ES FR GB GR IT LI LU NL SE**

(71) Applicant: **Shubow, Calvin**
**37644 Hills Tech Drive**
**Farmington Hills Michigan 48018(US)**

Applicant: **Bleadon, Andrew Stuart**
**1503 Thistle Road**
**Richmond Virginia 23233(US)**

Applicant: **Hamlin, Michael Eugene**
**2110 Running Brook Lane**
**Midlothian Virginia 23113(US)**

(72) Inventor: **Shubow, Calvin**
**37644 Hills Tech Drive**
**Farmington Hills Michigan 48018(US)**
Inventor: **Bleadon, Andrew Stuart**
**1503 Thistle Road**
**Richmond Virginia 23233(US)**
Inventor: **Hamlin, Michael Eugene**
**2110 Running Brook Lane**
**Midlothian Virginia 23113(US)**

(74) Representative: **Wilson, Michael John et al**
**c/o Albright & Wilson Limited 1**
**Knightsbridge Green**
**London SW1X 7QD(GB)**

(54) **Cement compositions and use thereof.**

(57) A composition for reacting with acidic aluminum phosphate solutions to form ultra light insulation and fireproofing layers e.g. on steel girders, comprises hydrophobicized light weight aggregate e.g. expanded perlite treated with silicate and/or silicone, magnesium, calcium and/or aluminum oxide or hydroxide and blowing agent, e.g. an alkaline earth metal carbonate.

## CEMENT COMPOSITIONS AND USES THEREOF

This invention concerns curable cement compositions for insulation and fireproofing.

In the construction of steel frame buildings it is necessary to fireproof or thermally insulate the steel structural members to avoid or suppress the softening and sagging of the structural members if a massive fire occurs in the building. Because of the recognised carcinogenic nature of asbestos coatings, it is no longer acceptable to use compositions containing asbestos for this purpose. The principal commercial product now used for fireproofing structural members is a cementitious mixture based on Portland cement, or a related bonding medium, and applied, by spray, as a water slurry. This material leaves much to be desired. The composition itself is only a mediocre insulating medium, so that a large quantity of material must be applied to the structural members. However, it has little adherence to the structural members, especially when wet, so that it tends to fall off of its own weight. This limits the quantity that can be applied in a single coating operation and often requires that two or more coatings must be applied to the same surface to build up sufficient thickness. This, together with the fact that the material sets up relatively slowly, increases the labor cost and hence the total cost of the coating.

Hacker US Patent 4303450 discloses compositions for fireproofing steel structural members, which compositions comprise cement, perlite aggregate and bentonite; the dry composition is mixed with water in a nozzle mixer and sprayed onto the steel surface.

There is a need for a coating which may be applied to structural members, which coating can adhere to the surface of the members, be capable of spray application and cure rapidly to provide good thermal insulation properties.

Aluminophosphate and magnesophosphate binders for various aggregates are known. Shubow US Patent 4419133 and 4503109 disclose bonded aggregate structures comprising alumina, magnesia, an aggregate such as sand or stone, or possibly expanded perlite or vermiculite, and a bonding agent comprising MAP (monoaluminum phosphate) ($Al(H_2PO_4)_3$).

Cassidy USP 3923534 discloses slow setting castable compositions comprising magnesia MAP and a refractory filler and may also contain plasticizers when the composition is to be used as a gunning mix, e.g. bentonite and other clays or substitutes therefore, and clays may also be present to increase the hot strength of the product.

Tomic US Patent 4174227 discloses grouting compositions for anchoring a bolt in a hole, comprising magnesia or magnesium silicate, MAP and aggregate.

Russell US Patent 4262055 discloses ammonium phosphate binders with a magnesia curing agent for light weight aggregates such as perlite. The aggregate binder mixture is applied as a fire protection material to a structural member. But such mixtures have the drawback that when reaction occurs between the ammonium phosphate and magnesia, there is released gaseous ammonia, which is unpleasant and hazardous for the workers.

Cassens US Patent 4276091 describes refractory compositions containing alkali metal phosphate and aluminum salt binders for refractory aggregates such as periclase, dolomite, chrome ore, bauxite and/or high alumina grog, together with bentonite and optionally pitch, and for alumina grain/bauxite aggregate, also plastic clay. The composition of Cassens is mixed dry and water is added to the dry mix in the nozzle of the gun prior to application to a surface.

Vukasovich US Patent 3148996 describes foamed ceramics made by reacting aluminum phosphate solution with calcium silicate to form a pasty product to which is added a gas or precursor therefor, such as a carbonate, followed by complete curing.

We have discovered an aggregate composition capable of being formed with a phosphate binder into a composition for coating a surface, e.g. by spray application to give an adherent insulant layer possessing good thermal insulation and extended coverage of the surface.

The present invention provides a light fireproofing acoustical and insulating barrier aggregate composition adapted for mixing with an aqueous acidic solution of a binder selected from the group consisting of monoaluminum dihydrogen phosphate monoalkaline earth metal dihydrogen phosphate and mixtures thereof, which comprises a hydrophobicized cellular mineral aggregate having an average density of from about 3 to about 90 lbs/cu.ft., an oxymetal compound which is an oxide or hydroxide of a metal selected from the group consisting of alkaline earth metal and aluminum and mixtures thereof and a solid inorganic blowing agent.

The aggregate compositions are converted to a curable composition by mixing with the acid phosphate solution just before use. In a second aspect of the invention there is provided a combination of two or more packages, the contents of which, on mixing, form a fireproofing and insulating barrier composition, which combination consists of (a) one or more packages containing the aggregate composition of the invention and (b) one or more packages containing an aqueous acidic solution of monoaluminum dihydrogen phosphate or monoalkaline earth metal dihydrogen phosphate or a mixture thereof. Mixing the contents of the packages produces a curable composition which is a further aspect of the invention and this composition may be used to fireproof a structural member by a method of this invention in which said composition is sprayed onto the member. Finally, there is provided a thermally insulated structural member with a core and thermally insulating coating, which has been applied by spraying the core with the curable composition.

The light weight cellular aggregate is inorganic and may be any of a variety of expanded cellular minerals, such as vermiculite, perlite, silicate, e.g. Dacotherm, glass, diatomite or slag, or other cellular materials, e.g. volcanic ash or pumice. Mixtures of these materials, or mixtures of cellular minerals with minor proportions of non-cellular aggregates, such as sand or crystalline alumino-silicate materials, such as mullite, may be employed, provided that the bulk density of the mixture of aggregates is in the range of 3-90 lbs/cu.ft., preferably 3-60 lbs/cu.ft. and especially 3-30 lbs/cu.ft. and most especially less than 15 lbs/cu.ft e.g. 5-15/cu.ft.

Preferably the aggregate is expanded perlite alone. The bulk density of the expanded perlite is most preferably 3-15, e.g. 5-10 lbs/cu.ft. The size of the aggregate is usually such that at least 90% e.g. at least 95% will pass through a 8 mesh screen (as measured by a US Standard Sieve size test) and not more than 10% e.g. not more than 5% is retained by a 8 mesh screen, and preferably at least 40% e.g. at least 50% be retained by a 20 mesh screen; usually less than 20% passes through a 50 size screen. Thus the aggregate is preferably such that at least 70% and especially at least 80% of the particles pass through an 8 mesh screen but not through a 50 mesh screen. Less preferred, the aggregate may be a mixture of particles of average size larger than the above sizes and particles of average size smaller than the above sizes; such aggregate mixtures may give rise to cured products of increased strength, but may require extra special mixing to ensure uniformity in the eventual cured coating. The expanded perlite is usually of agricultural grade. The perlite preferably has a hardness in the upper half of the hardness scale as measured by the Perlite Institute Standard PI-306-80.

The treated cellular aggregate is preferably expanded perlite (or vermiculite) which has been hydrophobicized, e.g. to reduce its water absorption. The treatment process will be exemplified with respect to expanded perlite but is usually suitable for other cellular aggregates. The treated perlite may be obtained by coating expanded perlite e.g. of 3-15 lb/cu.ft. density, for example by spraying with an aqueous medium containing a hydrophobicization agent, which is preferably a silicone oil or a silicate. Thus preferably the aqueous medium is an emulsion of a silicone oil e.g. one as sold by Dow Corning as Dow Corning 347 or by Union Carbide as Union Carbide 734 HS; the emulsion may contain 0.1-5% e.g. 1-3% by weight of silicone oil. Alternatively the aqueous medium is an aqueous solution of sodium silicate e.g. one in which the $SiO_2:Na_2O$ weight ratio is 2.5-4:1, e.g. 3-3.5:1; a solution of water glass is preferred. In either case the expanded perlite is coated with the aqueous medium in a volume ratio of 10-500:1 e.g. 50-200:1 particularly in respect of an expanded perlite of 3-15 lb/cu.ft., e.g. 5-10 lb/cu.ft. density. Preferably the cellular aggregate is coated with both the silicate solution and the silicone emulsion, the latter preferably after the former. The hydrophobicized cellular aggregate may be used alone or mixed with untreated cellular aggregate with the weight proportion of treated to untreated cellular aggregate preferably of 1:9 to 10:0, e.g. 3-10:7-0 such as about 1:1, or preferably 7-10:3-0. Advantageously all the cellular aggregate present has been hydrophobicized. The hydrophobicized aggregate is preferably used with untreated expanded aggregate, e.g. in an amount of 3-7:7-3 when the composition also contains thixotropic agent and clay, because with hydrophobicized aggregate alone the cured products tends to be rather soft. The presence of the hydrophobicized aggregate tends to increase the effectiveness of the curable composition in covering a surface with an insulated layer (hereafter termed coverage), so that a curable composition from a constant weight of aggregate composition covers a larger area when the hydrophobicized layer is present compared to that in its absence.

The oxymetal compound which preferably has a surface area of 5-200 m²/g is an oxide or hydroxide of an alkaline earth metal, e.g magnesium and/or calcium or aluminum; preferably the metal is calcium or magnesium optionally mixed with aluminum, or especially calcium optionally mixed with magnesium.

The magnesium oxide may be pure magnesium oxide, but various minerals high in MgO may be used. The magnesia, which may have been prepared from magnesite, can be caustic or "chemical" magnesia, or low reactivity magnesia, magnesia, or have a reactivity intermediate between these by varying the calcining conditions for the magnesite. The magnesia is preferably of high purity, e.g. at least 97% MgO.

The bulk density of the magnesia can be 30-250 lb/cu.ft, e.g. 50-150 and especially 50-100 lb/cu.ft. and its surface area 5-200 m²/g, preferably 5-150 or 5-50 m²/g such as 5-20 m²/g or 20-50 m²/g. The particle size of the magnesia may be such that at least 50% passes through a 325 mesh screen with at least 90% passing through a 200 mesh screen, but preferably the magnesia is of very fine particle size with at least 90%, especially at least 95%, passing through a 325 mesh screen and not more than 5%, especially not more than 2% retained by a 200 mesh screen. Increasing the surface area of the magnesia increases its activity and shortens the reaction time with the phosphate binder, and hence decreases the cure time of the final composition.

The oxyaluminum compound, which may be present, can be a dry alumina powder or alumina trihydrate or calcined alumina with typical analysis by weight of 99.8% $Al_2O_3$, 0.13% $Na_2O$, 0.03% $Fe_2O_3$ and 0.03% $SiO_2$. The particle size is usually such that at least 50% passes through a 325 mesh screen and at least 90% through a 200 mesh screen and preferably at least 90%, e.g. at least 95% passes through a 325 mesh screen. The bulk density of the alumina may be 30 - 100 lb/cu.ft., e.g. 60 - 80 lb/cu.ft. and its surface area 10-200 m²/g, e.g. 50-100 m²/g. Replacing some of the magnesia by alumina reduces the rate of reaction with the phosphate solution and hence lengthens the cure time but also increases the strength of the cured coating. The weight proportion of oxymagnesium to oxyaluminum compound can be 10:0-1:2.

The oxycalcium compound which is preferably present may be quick lime or hydrated lime or slaked lime. Such materials may be based solely on calcium compounds, e.g when derived from chalk, but are often based on a mixture of calcium and magnesium compounds, e.g. when derived from dolomitic limestone. The proportion of calcium oxide to magnesium oxide may be 4-10:6-0, e.g. about 10:0 or 4-7:6-3. The oxycalcium compound usually is such that at least 90% of the particles pass through a 325 mesh screen and not more than 5% retained by a 200 mesh screen. The surface area of the oxycalcium compound may be 0.1-200 m²/g, preferably 5-100 m²/g. The use of oxycalcium compounds whether or not they contain oxymagnesium compounds appear to increase significantly the effectiveness of the curable composition in providing a surface insulant coating over a wider area compared to that with oxymagnesium alone. The oxycalcium compound is usually more reactive in the curable composition compared to oxymagnesium compounds of the same surface area so that compositions containing the oxycalcium compounds tend to cure faster.

An inorganic blowing agent is present in the composition of the invention. The blowing agent usually has a particle size such that at least 50%, e.g. at least 90% pass through a 200 mesh screen and preferably at least 50% and preferably at least 90% pass through a 325 mash screen. Examples of solid inorganic blowing agents are carbonates, bicarbonates, sulfites and nitrites, e.g. of alkali metals and preferably alkaline earth metals, such as calcium carbonate, dolomite, magnesium carbonate, barium carbonate, and sodium or potassium carbonate or bicarbonate. The amount of blowing agent is usually such as to cause the dried layer on the substrate to expand to one and a half to ten times its volume without the blowing agent, thereby reducing the density of the dried layer maybe to as low as 7 to 10 lb/cu.ft. Thus amounts of 30-75% of calcium and/or magnesium carbonate (expressed by weight of the aggregate composition) may be used and equivalent gas forming amounts of the other carbonates and blowing agents. The weight ratio of carbonate compound, e.g. calcium and/or magnesium carbonate to oxymetal compound, e.g. of calcium or magnesium may be 5-30:1, such as 5-20:1 or 5-15:1 for magnesium oxide and 10-30:1, e.g. 15-30:1 for oxycalcium compounds. The inorganic blowing agent functions by reacting with the acidic phosphate binder solution to form a gas, e.g. carbon dioxide, and this reaction consumes some of the free acid in the binder solution or partially neutralizes the metal hydrogen phosphates. With increasing amounts of blowing agent it is desirable to increase the proportion of the metal hydrogen phosphate to oxymetal compound or preferably to add mineral acid such as extra phosphoric sulfuric or hydrochloric acid to the metal hydrogen phosphate solution to compensate for this reaction. The blowing agent produces bubbles of gas in the curing layer and in order to minimize their loss during curing it is preferable with increasing amounts of blowing agent to increase the curing speed, e.g. by increasing the proportion of oxymetal compound to acid phosphate or by using more reactive oxymetal compound, e.g. calcium hydroxide, rather than magnesia or alumina, or one of higher surface area, e.g. 20-50 or 30-40 m²/g rather than 5-20, e.g. about 10 m²/g. To aid production of a closed cell layer on the substrates a stearate salt of a divalent or trivalent metal, e.g. a calcium, aluminum or zinc stearate, may be present in the curable composition, again preferably in the aggregate composition, the weight percentage of the stearate to aggregate composition may be 0.1-5%.

The blowing agent is preferably a carbonate e.g. of an alkaline earth metal such as calcium and/or magnesium. Advantageously the blowing agent is calcium carbonate alone as in chalk or limestone or mixed e.g. by cocrystallization or physically with magnesium carbonate in weight proportions of 40-100:60-0 e.g. 40-85:60-15 such as 40-60:60-40 as in dolomite, or preferably a high calcium blowing agent with corresponding weight proportions of 60-100:40-0 such as 70-90:30-10 as in dolomitic limestone of 79% $CaCO_3$ 16% $MgCO_3$ and 3% silica and minor impurities.

While the blowing agent preferably has a particle size such that at least 95% passes through a 325 mesh screen, the particle distribution may be that at least 99% e.g. at least 99.5% passes through a 325 mesh screen and at most 1% e.g. at most 0.5% is retained thereby, or the distribution may be such that 95-98.9% passes through the 325 mesh screen and 1.1-5% e.g. 1.5-3% is retained. In respect of particles with the former particle distribution, at least 40% preferably pass through a 27 micron screen and advantageously at least 40% e.g. 50-75% are of particle size 11-39 micron with less than 25% of 39-44 micron and less than 25% of less than 11 micron.

There may also be present a thixotropic agent which may be a hydrated colloidal alumino-silicate clay, e.g. the montmorillonite clay such as bentonite, which may be of the variety which only swells to a small extent with water, e.g. less than 300%, such as calcium bentonites, but more preferably is of the high swelling variety, e g. capable of swelling more than 1000%, e.g. 1000-2500%, with water, such as the Western bentonites, e.g. the sodium bentonites from Wyoming or Texas. The bulk density of the bentonite when dry is usually 30-80 lb/cu.ft. especially 35-50 lb/cu.ft. in its loose form. Instead of the colloidal clay there may be used other inorganic thixotropic agents such as fumed silica or organic thixotropic agents such as gums, e g. gum arabic or etherified cellulose derivatives, such as carboxymethyl cellulose. The thixotropic agent, e.g.colloidal clay may help to stabilize the wet coating against shrinkage and compaction prior to setting particularly with mixtures of hydrophobicized and untreated cellular aggregates. The thixotropic agent, e.g. bentonite, may also reduce rebound losses when the curable composition is sprayed onto a surface. The thixotropic agent may also be talc or mullite or alumina, each of which is an example of a particulate material at least 90% of the particles of which pass through a 200 mesh screen. Usually the particulate material has a surface area of 0.1-1m²/g and less than 5% e.g. less than 2% of the particles do not pass a 100 mesh screen; preferably at least 90% e.g. at least 95% pass through a 325 mesh screen. The particulate material, which is not an inorganic blowing agent, nor magnesia of surface area of more than 5m²/g nor alumina of surface area of more than 10m²/g, may be silica flour, or oxides or silicates of alkaline earth metals or aluminum e.g.

magnesium silicates, including hydroxy silicates such as talc, low reactivity alumina e.g. "dead burnt" alumina or magnesia of surface area less than 1m²/g, aluminum silicate, such as mullite and pyrophyllite or calcium silicates such as wollastonite, or gypsum. If used the material is preferably talc and/or mullite, substantially all the particles of which pass through a 325 mesh screen. Advantageously however the composition of the invention is substantially free of said thixotropic agent and particulate materials.

Ball clay which may be present in the aggregate of this invention is a fine grained hydrated aluminum silicate with high plasticity, e.g. a kaolin or China clay which is primarily kaolinite. The relative weights of thixotropic agent and/or particulate material to ball clay are usually 0.1-4:1 such as 0.3-2.5:1 and especially 0.3-1.5:1. The ball clay may help to make the wet coating adhesive to the substrate for sufficiently long to enable the curable composition to set and bond itself to the substrate. But the composition is preferably substantially free of said ball clay. Compositions of the invention free of thixotropic agent, said particulate material and clay tend to have higher coverage and give less cracking than those with thixotropic agent, particulate material and clay.

The phosphate part of the binder is an acidic solution of monoaluminum dihydrogen phosphate (MAP) or monoalkaline earth metal dihydrogen phosphate or a mixture thereof. The alkaline earth metal may be calcium but is most preferably magnesium and the binder is preferably a mixture of the dihydrogen phosphates of aluminum and magnesium. The solution usually contains 10-60% by weight of the phosphate salt when the salt is from aluminum only and 20-40% by weight when the salt is from magnesium only, and from 20 to 40-50%, subject to solubility considerations, for mixtures of magnesium and aluminum salts. The solution usually has a pH of 0.5-2.0 due to the presence of an excess of phosphoric acid over that necessary to fully react with the metal or metals present in it. Typical commercial MAP solutions (about 50% by weight total salts) contain 7.8-8.2% $Al_2O_3$ (or 7.0% $Al_2O_3$ and 0.67% MgO) and 33.4-34.0% $P_2O_5$ with a weight ratio of $P_2O_5:Al_2O_3$ of about 4:1 or a molar ratio of P:Al of 3.03:1), (or a molar ratio of P to Al + Mg of 3.07:1) have a specific gravity (80°F/60°F) of 1.47-1.50, and a pH as shipped of about 1.0. A typical commercial monomagnesium dihydrogen phosphate solution (MMP) (about 37% total salts) contains 6.6-6.9% MgO, 32.3-34.3% $P_2O_5$, has a specific gravity (80°F/60°F) of 1.475-1.500 and a pH as shipped of about 1.2. In the mixtures the weight percentage of MMP to MMP and MAP may be 1-50%, e.g. 5-20%. Preferably the strong commercial aluminum or magnesium phosphate solutions or mixtures thereof are diluted with water before mixing with the other ingredients, i.e. the aggregate composition, e.g. one part by weight of the MAP solution is diluted with 0.5-4 parts by weight of water; thus the concentration of MAP solution used to mix with the other ingredients is preferably 10-35% by weight, especially 15-30% such as 15-25% by weight. The concentration of the phosphate solution should be such that the mixture with the other ingredients should be capable of flow and especially capable of being sprayed. The amount of water added separately or with one of the ingredients in order to make the final curable composition, when mixed but before curing is complete, is usually 10-50% such as 10-40% by weight, of the total weight of all the ingredients used to make the curable composition including the water. The aluminum phosphate solution may contain a small amount of phosphoric acid over that necessary to react fully with all the metals in it but preferably there is present a further amount of phosphoric acid and/or a mineral acid other than phosphoric e.g. sulfuric or nitric acid. The source of the aluminum phosphate solution containing an excess of phosphoric acid may be the rinse acid from aluminum polishing processes which can contain 0-5% e.g. 0-2% nitric acid, 15-25% mono aluminum tris(dihydrogen phosphate) and 20-40% e.g. 25-35% extra phosphoric acid. Amounts of the extra acid in total may be 0.5-50% by weight of the binder solution e.g. 10-45% such as 30-45% or 20-35%, with a weight ratio of blowing agent e.g. carbonate to total acid of 1-20:1 e.g. 1-10:1 and especially 1.5-3.5:1 and with a weight ratio of blowing agent, e.g. carbonate and oxymetal compound, to total acid of 1-20:1 such as 1-10:1 and especially 2-4:1.

The liquid binder solution at the time of mixing with aggregate composition to form a curable composition preferably contains by weight 8-25%, e.g. 15-25% mono aluminum bis(dihydrogen phosphate), 0-40%, e.g. 10-35% or 20-35% by weight of phosphoric acid (expressed as $H_3PO_4$) and 0-15%, e.g. 0 or 1-15% such as 5-13% and especially 8-12% sulfuric acid (expressed as $H_2SO_4$) and usually 35-85%, e.g. 40-60% water.

The aggregate composition may contain on a dry basis 0.5-10% e.g. 2-7% of the oxymetal compound e.g. 0.5-5% by weight of calcium oxymetal compound such as calcium hydroxide or mixtures thereof with up to a 1:1 weight proportion with magnesium hydroxide, e.g hydrated lime or 3-10% by weight in total of magnesium and/or aluminum oxymetal compound; 30-75% e.g. 40-60% of the carbonate; an amount of cellular aggregate in total which is 15-50% by weight in total and an amount of hydrophobicized cellular aggregate, e.g. perlite which is 5-50% by weight e.g. 10-40% such as 30-50%; 0-20% e.g. 0% or 5-20% of thixotropic agent, e.g. a particulate one such as talc or 1-10% bentonite; 0-25% e.g. 0% or 5-25% of clay, e.g. ball clay; the percentage of hydrophobicized aggregate to total of cellular aggregate may be 25-100% e.g. 40-100% such as 80-100%.

When the aggregate composition contains the thixotropic agent and clay, it preferably contains in addition to the oxymetal compound in the above amounts 30-55% of the carbonate, 15-35% in total of cellular aggregate and 8-35% of hydrophobicized cellular aggregate, 1-20% thixotropic agent e.g. talc or bentonite and 1-25% of ball clay.

When the aggregate composition is substantially free of thixotropic agent and clay, it preferably contains the above quoted amounts of oxymetal compound, 50-75% e.g. 50-65% of the carbonate, 30-50% in total of cellular aggregate and 20-50% e.g. 30-50% or 30-45% of hydrophobicized cellular aggregate and advantageously consists essentially of the oxymetal compound, especially hydrated lime, the carbonate and the hydrophobicized cellular aggregate, e.g. perlite in the above amounts.

The solid aggregate composition may also contain added water as explained hereinafter. Under these circumstances based on the total weight of aggregate composition including water, there may be 3-20%, e.g. 5-15% water, 0.5-10% oxymetal compound, e.g. 0.5-5% by weight oxycalcium compound (or mix thereof with oxymagnesium compound), 30-75%, e.g. 40-65% of the carbonate, 15-50% of cellular aggregate, preferably 25-50% or 25-40% of hydrophobicized cellular aggregate.

The curable composition comprises the aggregate composition and the liquid binder which is the solution of the metal acid phosphate which is monoaluminium tris dihydrogen phosphate and/or magnesium bis (dihydrogen phosphate), and acid, which is phosphoric acid and optionally at least one other mineral acid such as sulfuric hydrochloric or nitric acid. Based on the combined weight (on a dry basis) of the aggregate composition and the metal acid phosphate (i.e. excluding the water and extra acid) the curable composition may contain 0.5-10% e.g. 2-7% of the oxymetal compound such as 3-10% of oxymagnesium and/or oxyaluminum compound or 0.5-4.5% of oxycalcium compound, 25-75% e.g. 35-60% of the carbonate, 0-18% e.g. 0% or 4-18% of thixotropic agent e.g. talc or bentonite, 0-23% e.g. 0% or 4-23% of ball clay, 15-50% e.g. 25-45% by weight in total of cellular aggregate, an amount of hydrophobicized cellular aggregate e.g. perlite of 5-50% e.g. 10-40% such as 25-40% and 2-20% e.g. 8-16% of the metal acid phosphate, particularly monoaluminum dihydrogen phosphate and mixtures thereof with 5-20% monomagnesium dihydrogen phosphate (based on the total of metal acid phosphates).

When the curable composition comprises the thixotropic agent and/or clay, then the composition preferably contains in addition to the oxymetal compound 30-55% e.g. 35-45% of the carbonate, 1-15% of thixotropic agent e.g 5-15% talc or 1-8% bentonite, 1-23% ball clay, 15-35% in total of cellular aggregate and 7-35%, e.g. 7-20% of hydrophobicized aggregate and 2-10% of the metal acid phosphate, the percentages being on a dry basis.

When the curable composition is substantially free of the thixotropic agent and clay, the curable composition preferably contains the oxymetal compound, 40-60% e.g. 45-57% of the carbonate, 25-45% e.g. 25-40% in total of the cellular aggregate and 15-45% e.g. 25-40% of the hydrophobicized cellular aggregate and 4-20% e.g. 8-16% and especially 9-13% of the metal acid phosphate especially mono aluminum dihydrogen phosphate the percentage being expressed on a dry basis. Apart from water and extra acid the curable composition preferably consists essentially of the oxymetal compound, especially hydrated lime, the carbonate, hydrophobicized cellular aggregate, e.g. perlite and the aluminum dihydrogen phosphate.

In the total curable composition there is water, phosphoric acid and preferably another mineral acid e.g. sulfuric acid. The amount of water is usually 10-40% e.g. 15-35% by weight of the total composition including water and acid, when the composition contains thixotropic agent and/or clay, or when the composition contains unhydrophobicized aggregate more water is used than with other compositions and the amount of water is usually 20-35%, but otherwise advantageously the amount of water is 15-25% and especially if the treated cellular aggregate has not been prewetted 17-23% by weight, particularly when the oxymetal compound is a calcium compound such as calcium hydroxide or hydrated lime. When the treated cellular aggregate has been prewetted with water before the curable composition is prepared, the total amount of water present in the curable composition is preferably 20-30% especially with oxycalcium compounds and no untreated aggregate. The amount of phosphoric acid (expressed as $H_3PO_4$) in the total curable composition is usually 2-15% e.g. 2-8% when the composition contains thixotropic agent and/or clay and 4-15% otherwise eg. 8-15%. The amount of mineral acid e.g. sulfuric acid is usually 0-10% eg. 1-6% and especially 2.5-6% or 0% particularly with oxycalcium compounds and no unhydrophobicized aggregate. The amount of the liquid binder is usually 25-50% of the total of liquid binder and aggregate composition. The weight ratio of aggregate composition to liquid binder is usually 1.1-2.2:1 e.g. 1.1-1.8:1 such as 1.2-1.6:1; the weight ratio of aggregate composition to water in the liquid binder is usually 1.8-4.0:1, e.g. 2.5-4.0:1 and the weight ratio of aggregate composition to total of phosphoric acid and sulfuric (if any) is usually 2-25:1, e.g. 2-10:1 such as 2-7:1.

The curing speed and strength of the cured product depend on the nature of the oxymetal compound, its surface area and the amount of it relative to the phosphate content of the acidic binder solution and to the free phosphoric acid content of that binder solution. Increasing the amount of the metal oxide and/or its surface area and/or increasing the free acid content increases the cure rate, while increasing the phosphate content increases the strength of the cured product.

Various additional ingredients can be added to the compositions if desired. For example, silicates such as magnesium silicate or aluminum silicate, e.g. as the naturally occurring mullite, may be present in the compositions as long as the density of the final product is not increased too much. Amounts of such silicates may be in a weight ratio to MgO of 6-26:7-20 or 5-20:1 e.g. about 10-20:1. The replacement of MgO by a silicate reduces the cure rate. Particularly for hospital use, fungicides such as 8-hydroxyquinoline may be present.

The composition may also contain gypsum or an inert filler such as a silica or sand filler e.g. of particle size such that at least 70% is of 40 to 100 mesh size with not more than 15% each above and below that range of sizes and not more than 7% greater than 30 mesh. The filler which can replace some of the cellular aggregate increases the thermal capacity of the layer.

The composition may also contain a surface active agent e.g. a non ionic, anionic or cationic surfactant. Preferably the non ionic surfactant is an etherified alcohol such as a poly alkylenoxylated fatty alcohol with 1-20 alkylene oxide units e.g. ethylene oxide or propylene oxide units and with 8-24 e.g. 8-18 carbon atoms in the fatty alcohol. Other non ionics may be poly alkylenoxylated (optionally alkyl) substituted phenols with 1-18 carbon atoms in the alkyl group. or poly alkylenoxylates from ethylene oxide and/or propylene oxide units. The amount of surface active agent is usually 0.1-5% by weight of the total wet curable composition or 0.5-10% by weight based on the weight of the blowing agent or 0.1-5% e.g. 0.1-1.0% by weight based on the total weight of water in the curable composition. The surfactant is usually mixed with the acidic phosphate binder solution before the mixing with the particulate body.

The curable composition of the invention are made by thoroughly mixing the ingredients. As the compositions tend to have high cure rates, e.g. with a cure time of 10 minutes or less, it is preferred to spray or gun the composition onto the surface. The reacting components, i.e. the aggregate composition and acidic phosphate solution may be put in separate chambers of a gun and passed separately to be mixed at or near the nozzle of a mixing or spray gun, which may eject the mixture as a spray onto the surface using a pressure of, e.g., up to 150, e.g. 5-150, e.g. 5-20 such as about 10 p.s.i. gas, e.g. air pressure. Pressure applied spray mixing is preferred. Preferably the oxymetal compound is premixed thoroughly with the aggregate and other dry ingredients, and then the combined aggregate composition is mixed in the gun with the acidic phosphate solution preferably under nozzle mix conditions just at the point of discharge of the wet material from the gun and the mixture is sprayed. The particles of aggregate composition are usually mixed in the gun with the air stream and then the acidic phosphate solution introduced into the stream of particles to form a wet material containing about 10-50% such as 10-30% water (based on the total weight of material). The ratio of the volume of the aggregate composition e.g. of density 8-20lb/cu.ft. to the aqueous phosphate solution is usually 10-2:1 e.g. 5-2:1. The spray guns may be conventional dry mix or nozzle guns. The oxymetal compound, aggregate, blowing agent and other dry ingredients if any, may be mixed dry in a ball mill or after addition of an amount of water, which is 1-20%, e.g. 5-15%, such as about 10% by weight of the other components and then mixing thoroughly, to uniformly coat the aggregate with the other ingredients. The wet mass primarily coats the surface of the aggregate. The prewetting of the cellular aggregate may be before mixing with the other solid ingredients or after mixing, e.g. with oxymetal especially oxycalcium compounds or mixtures thereof with oxymagnesium ones. An amount of water to total cellular aggregate especially in the absence of unhydrophobicized cellular aggregate is usually 10-50%, e.g. 20-40%. The prewetting often increases the effectiveness of the curable composition in covering the surface with an insulant layer compared to that found with no prewetting of the aggregate. The product obtained is a slightly damp but handleable particulate body, the aggregate composition. The production of this body may be performed in a factory with the body being shipped to the site of use of the curable composition, e.g. a building site or another factory where the body is to be mixed with the acidic phosphate solution and used to coat the surface to be treated.

Compositions according to the invention may be applied to any substrate. Since steel is the usual material from which beams, girders and the like are built, emphasis has been placed on steel and other ferrous materials. However the compositions can be applied to other structural materials, such as aluminum and other non-ferrous metals, concrete, plastic, glass, asbestos and wood. In addition to beams, the compositions may be applied to walls, panels, and various items of process equipment such as vats and storage tanks. The coating on the substrate in its dried and set state may be 0.25-4.0 inches thick. The compositions may be applied as a sealant for a surface, e.g. an asbestos surface, to make it fireproof, and if required environmentally safe. The compositions are preferably applied to give a heat insulant or fireproofing or acoustic insulation coating.

Because the setting reaction is exothermic and setting will occur at 100-180°F, no heat is needed for cure, even in cold weather, down to about -15°F. By varying the amounts of oxymetal compound, metal acid phosphate and free acid and the degree of subdivision of the oxymetal compound setting times can be varied from almost instantaneous to whatever is desired, e.g. 4-60 minutes, e.g. 35-60 minutes or 4-11, e.g. 9 or 10 minutes. The compositions of the invention may be applied in thick layers with a reduced tendency to rebound losses and separation of the coating from the substrate. The wet coating is usually continuous and free from breaks or separation and tends to adhere to itself and to the substrate long enough to enable the chemical phosphate bonding to set the coating and adhere itself to the substrate. This adhesion of the wet coating to the substrate can apply also to vertical and overhead substrates as well without excessive loss of applied material due to fall-off, drip, rebound or gravity drop and without need for expensive bracing and wire meshes. Adhesion usually occurs with only slight kinetic rebound of any heavy particulate material from the surface. The compositions of the invention usually have trowelability and low susceptibility to tearing. Another important advantage is that the compositions are not corrosive to steel, though there appears to be some chemical action with the steel since compositions according to the invention bond tightly to steel substrates, so tightly that they must be chipped off with a chisel. The fireproofing properties of the composition, after application, drying and setting, are outstanding, being typically characterised by fireproofing protection against thermal transmission equivalent to ASTM E1709 as a base coat 1.25 inches thick for at least 1.75 hours at 2000°F.

The invention will be further illustrated by the following specific examples, which are given for illustration only and are not intended as limiting the invention beyond the scope of the appended claims.

In the specification including Examples, parts and percentages are by weight unless otherwise specified, and screen sizes were determined according to the US Standard Sieve size tests. In the Examples the products used, namely, expanded perlite, treated perlite, ball clay, magnesia, alumina, hydrated lime, dolomitic limestone, talc and monoaluminum phosphate solution, have the following characteristics. The expanded perlite is an agricultural grade material of density 8 lb/cu.ft. of which at least 60% of the particles are retained by a 20 mesh screen and not more than about 2% do not pass through an 8 mesh screen; the particle distribution is 0-2% (+8 mesh) 5-40% (-8 to +16) 10-30% (-16 to +20) 5-20% (-20 to +50) 0-15% (-50 to +100) and 0-5% (-100 mesh). The treated perlite from Chemroc Corp. Nashville, Tenn. was obtained by spraying the expanded perlite with aqueous liquor in 2 stages and allowing the product to dry between the stages and afterwards. 4 cu.ft. of the expanded perlite was treated first with 1 US quart of an aqueous liquor, which was a mixture of 2 parts of water and 1 part of sodium silicate solution, which solution contained $SiO_2$ and $Na_2O$ in a weight ratio of 3.25:1 and was sold by du Pont Corp. as Solution F. The treated perlite was then retreated with 1 US quart of an emulsion of silicone oil in which 1 part of a 60% solids emulsion of Dow Corning 347 silicone oil had been diluted with 30 parts of water. The magnesia was a fine particle product of which at least 90% passed through a 200 mesh screen and had a surface area of 30-40 $m^2/g$. The alumina was alumina trihydrate $Al_2O_3.3H_2O$ and was a fine particle product of which at least 90% passed though a 200 mesh screen. The hydrated lime was a fine particle product analyzing as 47.9% CaO, 33.5% MgO and 18.2% water and with a particle size such that 98% passed through a 325 mesh screen. The mono aluminum phosphate solution was rinse acid from an aluminum polishing process and contained 1.5% nitric acid, 18% mono aluminum tris-(dihydrogen phosphate) and 28.9% phosphoric acid. The dolomitic limestone was a microfined product with a chemical analysis of 79% $CaCO_3$, 16% $MgCO_3$, 3% $SiO_2$ and the rest impurities, a bulk density packed of 60 lbs/cu.ft. and loose of 58 lb/cu. ft. and a particle size such that 99.9% passes through a 325 mesh screen and 80% of 39 microns, 59% of 27 microns, 28% of 17 microns, 13% of 11 microns and 5% of -5 microns. The ball clay was Ball Clay No. 6 of Kentucky Tennessee Clay Corp. of density 40-50 lb/cu.ft. The talc, which was talc No. 1 from R.T. Vandebilt Corp. of Connecticut was of density 60-70 lbs/cu.ft. and approximately all of its particles passed through a 325 mesh screen; the talc was believed to contain a small amount of carbonate.

Example 1

A fire proofing composition was made from the following ingredients: 550 parts of expanded perlite, 550 parts of treated expanded perlite, 633 parts of talc, 500 parts of ball clay, 150 parts of magnesia, 200 parts of alumina, 2200 parts of the dolomitic limestone, 1900 parts of the monoaluminum phosphate solution and 950 parts of water.

The magnesia, alumina, ball clay, talc, expanded perlite and treated perlite were mixed together dry to give an aggregate composition.

The aggregate composition and a mixture of the monoaluminum phosphate solution and the water were separately fed to the nozzle of a nozzle gun mixer fed with compressed air. The mixer was a modified gunite mixer with a nozzle of the type used for urea formaldehyde foam spraying. The damp body and mixture met in the nozzle and formed a spray which was directed to an I-shaped steel structural beam member W10 × 49.3 to form a wet coating thereon. The coating, about 2 inch thick, was allowed to dry and set to give a cured insulant layer.

Example 2

The process of Ex 1 was repeated but with the following ingredients, 590 parts expanded perlite, 590 parts of treated perlite 200 parts of magnesia, 1804 parts of the dolomitic limestone, 1100 parts of the aluminum phosphate solution and 1200 parts of water. The mixture of aggregate composition and binder solution was sprayed and formed an adhesive coating about 2 inch thick, which dried to give a good heat insulant layer.

Example 3

The process of Ex 2 was repeated with 579 parts of expanded perlite, 579 parts of treated perlite, 200 parts of magnesia, 1804 parts of the dolomitic limestone, 1020 parts of the aluminum phosphate solution, 908 parts of water and 102 parts of 93% sulfuric acid. The mixture of aggregate composition and binder solution was sprayed and formed an adhesive coating about 2 inch thick, which dried to give a good heat insulant layer.

Example 4

In the same manner as in Example 1, a fireproofing composition was prepared and used to coat not only the steel beam but also a series of boards 1 ft. square to a depth of 1 inch. The composition was derived from an aggregate composition consisting of magnesia (800 parts), dolomitic limestone (7216 parts), talc (1582 parts), ball clay (3156 parts), treated perlite (2316 parts), untreated perlite (2316 parts) and a binder solution of monoaluminum phosphate solution (3305 parts) and water (4957 parts). The number of boards coated by the curable composition from a particular weight of the aggregate composition was determined and from it the number coated by the curable composition from 50 lb of aggregate composition (hereafter called the "specific coverage") was calculated to be 17.

The specific coverage from a corresponding composition in which the treated perlite had been replaced by an equal weight of untreated perlite was 14-15.

## Example 5

In the manner of Example 4, a fireproofing composition was prepared and used to coat the steel beam and also the boards. The composition was derived from an aggregate composition consisting of magnesia (800 parts), dolomitic limestone (7216 parts); treated perlite (2316 parts), untreated perlite (2316 parts) and a binder solution of monoaluminum phosphate solution (4086 parts), sulfuric acid (408 parts) and water (4086 parts). The specific coverage was 20 boards. The layer on the steel beam showed no cracking (cf that of Example 4 for which a small amount of cracking on drying was visible) and was harder than the layer in Example 4.

## Example 6

The process of Example 5 was repeated with the same amount of aggregate composition, but a binder solution consisting of monoaluminum phosphate solution (10302 parts) and 96% sulfuric acid (1030 parts). The specific coverage was 22 boards and the cured layer on the steel beam was a good insulant but showed a small amount of cracking.

## Example 7

The process of Example 5 was repeated with an aggregate composition of hydrated lime (400 parts), dolomitic limestone (7216 parts), treated perlite (4632 parts) and a binder solution of monoaluminum phosphate (7454 parts) and 96% sulfuric acid (754 parts). The specific coverage was 29 boards and the layer on the steel beam was a good insulant free of cracks and harder than the layers in Examples 4-6.

## Example 8

The process of Example 7 was repeated with an aggregate composition of hydrated lime (320 parts), dolomitic limestone (7216 parts) and treated perlite (4632 parts) and the binder solution contained monoaluminum phosphate solution (7887 parts) and sulfuric acid (789 parts). In this Example the treated perlite was wetted by spraying with 1304 parts of water before it was mixed with the other solid ingredients. The specific coverage was 34.7 boards and the layer on the steel beam was a good insulant free of cracks and harder than the layers in Examples 4-6.

## Example 9

The process of Example 8 was repeated with the same aggregate composition but an aqueous binder solution of monaluminum phosphate solution (8635 parts) and sulfuric acid (863 parts). In this Example the treated perlite and hydrated lime were mixed first before being sprayed with 1304 parts of water and then mixed with the other solid ingredients. The specific coverage was 32 boards and the layer on the steel beam when dry was a good insulant free of cracks and harder than the layers in Examples 4-6.

## Example 10

The process of Example 8 was repeated with the same aggregate composition but with an aqueous binder solution of monoaluminum phosphate solution (8431 parts) but no sulfuric acid. The specific coverage was 35.8 boards and the layer on the steel beam when dry was a good insulant free from cracks and harder than the layers in Examples 4-6.

## Example 11

The process of Example 8 was repeated with hydrated lime (320 parts), alumina (800 parts) dolomitic limestone (7216 parts), treated perlite (4632 parts) and monoaluminum phosphate solution (7720 parts) but no sulfuric acid. The treated perlite was wetted with 1304 parts of water before mixing with the other solid ingredients. The specific coverage was 31.8 boards, and the dry layer on the beam was a good insulant free from cracks and harder than the layers in Examples 4-6.

## Claims

1. A light fireproofing and insulating barrier aggregate composition adapted for mixing with an aqueous acidic solution of a binder selected from the group consisting of monoaluminum dihydrogen phosphate, monoalkaline earth metal dihydrogen phosphate and mixtures thereof, which comprises a hydrophobicized cellular mineral aggregate having an average density of from about 3 to about 90 lbs/cu.ft. an oxymetal compound which is an oxide or hydroxide of a metal selected from the group consisting of alkaline earth metal and aluminum and mixtures thereof and a solid inorganic blowing agent.

2. A composition according to claim 1 wherein the aggregate is selected from the group consisting of· hydrophobicized expanded perlite and mixtures thereof with expanded perlite.

3. A composition according to claim 2 wherein the hydrophobicized expanded perlite has been made by coating expanded perlite of density 3-15 lb/cu.ft. with an aqueous medium containing a hydrophobicizing agent selected from the group consisting of alkali metal, silicates, silicone oils and mixtures thereof.

4. A composition according to claim 3 wherein the expanded perlite is made by coating with the aqueous solution of silicate and then with an aqueous emulsion of silicone oil.

5. A composition according to claim 2 wherein all the cellular aggregate is hydrophobicized.

6. A composition according to claim 1 wherein the oxymetal compound is an oxide or hydroxide of calcium or magnesium or a mixture thereof with an oxide or hydroxide of aluminum.

7. A composition according to claim 1 wherein the oxymetal compound is an oxide or hydroxide of calcium or a mixture thereof with an oxide or hydroxide of magnesium.

8. A composition according to claim 1 wherein the oxymetal compound has a surface area of 5-200 $m^2/g$.

9. A composition according to claim 1 wherein the blowing agent is a carbonate, the particles of which are such that at least 95% passes through a 325 mesh screen, 40-70% passes through a 27 micron screen and 50-75% through a 11-39 micron screen.

10. A composition according to claim 9 wherein the blowing agent is a mixture of calcium carbonate and magnesium carbonate in a weight ratio of 60-90:40-10.

11. A composition according to claim 1 which is free of talc, bentonite, mullite and ball clay.

12. A composition according to claim 1 which comprises on a dry basis 15-45% of cellular aggregate in total 10-40% of treated perlite, untreated perlite in a weight ratio to treated perlite of 0-7:10-3, 0.5-10% in total of said oxymetal compound and 30-75% of a carbonate blowing agent.

13. A composition according to claim 11 which comprises at least one of 5-15% ball clay, 5-20% of talc and 1-8% of bentonite.

14. A composition according to claim 1 which consists essentially of 30-45% of hydrophobicized perlite, 4-8% of magnesia or a mixture thereof with alumina, 50-65% of carbonate blowing agent, the percentages being on a dry basis.

15. A composition according to claim 14 wherein the hydrophobicized perlite is the product of coating with a silicate and silicone oil an expanded perlite of density 3-15 lb/cu.ft. the magnesia and/or alumina are of surface area 5-200 $m^2/g$, and the carbonate is a mixture of calcium, and magnesium carbonate in a weight ratio of 70-90:30-10 and of particle size such that at least 99% passes through a 325 mesh screen and at least 40% passes through a 27 mesh screen.

16. A composition according to claim 7 which consists essentially of 30-45% hydrophobicized perlite, 0.5-5% of an oxymetal compound which is selected from the group consisting of calcium hydroxide and mixtures thereof with up to a 1:1 weight proportion with magnesium hydroxide and is of surface area 5-200 $m^2/g$ and 50-65% of carbonate blowing agent, the percentages being expressed on a dry basis.

17. A composition according to claim 16 wherein the hydrophobicized perlite is the product of coating with a silicate and silicone oil, an expanded perlite of density 3-15 lb/cu.ft. and the carbonate is a mixture of calcium and magnesium carbonate in a weight ratio of 70-90:30-10 and of particle size such that at least 99% passes through a 325 mesh screen and at least 40% passes through a 27 mesh screen.

18. A composition according to claim 16 wherein the hydrophobicized perlite contains an amount of water which is 20-40% of the weight of the dry weight of the hydrophobicized perlite.

19. A composition according to claim 17 wherein the hydrophobicized perlite contains an amount of water which is 20-40% of the weight of the dry weight of the hydrophobicized perlite.

20. A combination of 2 or more packages, the contents of which on mixing form a fireproofing and insulating barrier composition, which combination consists of (a) one or more packages containing an aggregate composition which comprises a hydrophobicized cellular mineral aggregate having an average density of from about 3 to about 90 lbs/cu.ft., an oxymetal compound which is an oxide or hydroxide of a metal selected from the group consisting of alkaline earth metals, and aluminum and mixtures thereof and a solid inorganic blowing agent, and (b) one or more packages containing an aqueous acidic solution of monoaluminum dihydrogen phosphate or monoalkaline earth metal dihydrogen phosphate or a mixture thereof.

21. A light fireproofing and insulating barrier composition comprising a reagent selected from the group consisting of monoaluminum dihydrogen phosphate, monoalkaline earth metal dihydrogen phosphate and mixtures thereof, a hydrophobicized cellular mineral aggregate having an average density of from about 3 to about 90 lbs/cu.ft., an oxymetal compound which is an oxide or hydroxide of a metal selected from the group consisting of alkaline earth metal and aluminum and mixtures thereof and a solid inorganic blowing agent.

22. A composition according to claim 21 which comprises an aqueous binder solution of 8-25% by weight of monoaluminum dihydrogen phosphate and 0.5-40% in total of mineral acid selected from the group consisting of phosphoric acid and sulfuric acid and mixtures thereof and an aggregate composition which comprises hydrophobicized expanded perlite of 3-15 lb/cu.ft. density, oxymetal compound which is an oxycalcium or oxymagnesium compound or mixture thereof and a carbonate blowing agent which is calcium carbonate or a mixture thereof with magnesium carbonate, the weight proportion of the aggregate composition to binder solution being 1.1-1.8:1.

23. A composition according to claim 22 which comprises 125-180 parts of an aqueous binder solution containing 15-25% monoaluminum tris (dihydrogen phosphate) 15-35% phosphoric acid and 0-10% sulphuric acid and 100 parts of an aggregate composition containing 30-45% of hydrophobicized expanded perlite, 0.5-5% of oxymetal compound which is selected from the group consisting of calcium hydroxide and mixtures thereof with up to 1:1 weight proportion magnesium hydroxide and is of surface area 5-200 m²/g and 50-65% of a mixture of calcium and magnesium carbonate in a weight ratio of 60-100:40-0, the particles of which are that at least 99% pass through a 325 mesh screen and at least 40% pass through a 27 micron screen, the percentages being expressed on a dry basis.

24. A composition according to claim 23, wherein the hydrophobicized expanded perlite is the product of coating with a silicate and then with a silicone an expanded perlite of density 3-15 lb/cu.ft. and then has been prewetted with 20-40% of water (based on the weight of hydrophobicized expanded perlite.

25. A method of fireproofing a structural member which comprises spraying said member with an aqueous composition comprising a first ingredient, which is monoaluminum dihydrogen phosphate or monoalkaline earth metal dihydrogen phosphate or a mixture thereof, a hydrophobicized cellular aggregate having a density of between about 3 and about 90 lbs/cu.ft., an oxymetal compound which is an oxide or hydroxide of a metal selected from the group consisting of alkaline earth metal and aluminum and mixtures thereof and a solid inorganic blowing agent.

26. A thermally insulated structural member comprising a core and a thermally insulated coating, said coating having been achieved by applying to the core an aqueous composition comprising a first ingredient which is monoaluminum dihydrogen phosphate or monoalkaline earth metal dihydrogen phosphate or a mixture thereof, a hydrophobicized cellular mineral aggregate having a density of from 3 to 90 lbs/cu.ft. and an oxymetal compound which is an oxide or hydroxide of a metal selected from the group consisting of alkaline earth metal and aluminum and mixtures thereof and a solid inorganic blowing agent.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,Y | EP-A-0 217 569 (C. SHUBOW)<br>* Abstract; claims 1-6,10-13,21,30-32 * | 1-3,5-9,11,13,14,16,20-22,25,26 | C 04 B 28/34<br>C 04 B 20/10<br>C 04 B 38/10 //<br>(C 04 B 28/34<br>C 04 B 14:04<br>C 04 B 14:18<br>C 04 B 20:10<br>C 04 B 22:08<br>C 04 B 22:10 ) |
| Y | EP-A-0 063 344 (HOECHST)<br>* Abstract; page 1, lines 1-31 * | 1-3,5-9,11,13,14,16,20-22,25,26 | |
| A | DE-B-1 030 754 (S. CLIPSON)<br>* Claims 1,3 * | 3 | |
| A | EP-A-0 136 378 (MASONITE CORP.)<br>* Claims 1,2,4,14,15 * | 1,20 | |
| A | FR-A-2 374 393 (ASAHI-DOW)<br>* Claims 9,16,17; page 6, lines 17-22 * | | |

TECHNICAL FIELDS
SEARCHED (Int. Cl.4)

C 04 B 28/34

The present search report has been drawn up for all claims

| Place of search | Date of completion of the search | Examiner |
|---|---|---|
| THE HAGUE | 14-06-1988 | DAELEMAN P.C.A. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P0401)